# NEUE EUROPÄISCHE PATENTSCHRIFT

(11) **EP 3 473 069 B2**
(45) Veröffentlichungstag und Bekanntmachung des Hinweises auf die Entscheidung über den Einspruch: **03.07.2024**
(45) Hinweis auf die Patenterteilung: 28.04.2021
(21) Anmeldenummer: 18200587.6
(22) Anmeldetag: 16.10.2018
(51) Int. Cl.: A01B 39/18, A01B 39/16

(54) **FINGERHACKENELEMENT SOWIE EIN BODENBEARBEITUNGSGERÄT UMFASSEND EIN SOLCHES FINGERHACKENELEMENT**
FINGER HOE ELEMENT AND SOIL WORKING IMPLEMENT COMPRISING SUCH A FINGER HOE ELEMENT
ÉLÉMENT DE SARCLEUSE À DOIGTS AINSI QUE DISPOSITIF DE TRAITEMENT DU SOL COMPRENANT UN TEL ÉLÉMENT DE SARCLEUSE À DOIGTS

(30) Priorität: 18.10.2017 DE 202017106309 U
(43) Veröffentlichungstag der Anmeldung: 24.04.2019
(73) Patentinhaber: Bähr Bau- und Landmaschinen GmbH & Co. KG, 76831 Ilbesheim (DE)
(72) Erfinder: BÄHR, Oliver, 76831 Göcklingen (DE)
(74) Vertreter: Patentanwälte Dr. Keller, Schwertfeger Partnerschaft mbB

(56) Entgegenhaltungen:
- EP-B1- 1 116 427
- CN-Y- 2 533 644
- DE-A1-102016 001 416
- GB-A- 1 032 663
- PL-B1- 216 708
- US-A- 4 518 043
- US-A- 4 646 850

## Beschreibung

Die vorliegende Erfindung betrifft ein Fingerhackenelement sowie ein Bodenbearbeitungsgerät umfassend ein solches Fingerhackenelement.

Wie es beispielsweise aus der EP 1 127 481 B1 oder der EP 1 116 427 B1 bekannt ist, werden Fingerhackenwerkzeuge insbesondere im Gemüse- und Sonderkulturanbau verwendet, um unerwünschtes Beikraut innerhalb einer oder mehrerer Kulturreihen zu beseitigen. Die bisher bekannten Fingerhackenwerkzeuge weisen eine Fingerscheibe mit sich in radialer Richtung erstreckenden Fingern auf. Im Betrieb wird die Scheibe geneigt, so dass die Finger unter einem vorbestimmten Winkel in den Boden eingreifen können. Um die Fingerscheibe anzutreiben, sind an einer Seite der Fingerscheibe Bodenantriebselemente vorgesehen, die von der Fingerscheibe seitlich abstehen. Diese Bodenantriebselemente greifen in den Boden und versetzen die Fingerscheibe in Bewegung, wenn die an einem Zugfahrzeug drehbar befestigte Fingerscheibe von dem Zugfahrzeug gezogen wird. Die Dokumente PL 216708 B1 und DE 10 2016 001 416 A1 beschreiben bekannte Fingerhackenwerkzeuge.

Die bisher bekannten Fingerhackenwerkzeuge sind vor allem für den Einsatz in einem weichen und lockeren Boden geeignet, wie er bei frisch gepflanzten Pflanzen im Gemüse- und Sonderkulturanbau häufig anzutreffen ist. Im Gegensatz zum Gemüse- und Sonderkulturanbau, in dem viele Pflanzen jährlich neu gesetzt werden, bleiben im Weinbau die einmal angepflanzten Weinstöcke über Jahre an Ort und Stelle. Dies führt dazu, dass sich die Erde um die Weinstöcke im Laufe der Zeit verfestigt, so dass die bisher bekannten Fingerhackenwerkzeuge nicht immer das gewünschte Ergebnis liefern.

Im Weinbau hat sich daher der Einsatz von Rollhacken bewährt, um den Boden zwischen den einzelnen Weinstöcken in den Weinbergen zu bearbeiten. Rollhacken heben die Erde an, zerkleinern diese und verschieben die Erde um den Rebstock. Hierbei werden die unerwünschten Unkrautpflanzen beschädigt, was zu einem Absterben der Unkrautpflanzen führt. Gerade im Weinanbau bedarf es jedoch einiger Erfahrung, um ein optimales Ergebnis mit Hilfe einer herkömmlichen Rollhacke zu erreichen. So können Fehleinstellungen der Rollhacke dazu führen, dass entlang der Rebstöcke ein Unkrautstreifen stehen bleibt oder dass sich in einer Rebenzeile zwischen den Reben ein unerwünschter Erdhügel ansammelt.

Es ist daher Aufgabe der vorliegenden Erfindung, eine Bodenbearbeitungsvorrichtung bzw. ein Werkzeug für eine Bodenbearbeitungsvorrichtung bereitzustellen, welche es ermöglichen, insbesondere im Weinbau oder Spalierobstanbau unerwünschten Bodenbewuchs ohne Einsatz von chemischen Mitteln zu beseitigen und bei welchen die oben genannten Nachteile überwunden sind.

Erfindungsgemäß wird die Aufgabe gelöst durch ein Fingerhackenelement gemäß dem Gegenstand des Anspruchs 1.

Wird bei einer Anwendung, bei der die Fingerscheibe im Wesentlichen horizontal zum bearbeitenden Boden ausgerichtet ist, das Fingerhackenelement in Drehung versetzt, greifen die spitzen Kanten der Finger des Fingerhackenelements in die zu bearbeitende Erde. Die sich an bzw. in der Erdoberfläche drehende Fingerscheibe lockert die oberste Bodenschicht und entfernt die in der Erde befindlichen unerwünschten Unkrautpflanzen um die Kulturpflanze herum.

Die sich in axialer Richtung erstreckende erste Erhebung sorgt dafür, dass auch Erdschichten unterhalb der Fingerscheibe gelockert und Wurzeln von unerwünschten Pflanzen entfernt werden. Die Erhebung übernimmt darüber hinaus auch die Funktion eines Antriebselements. Bei einer bevorzugten Weiterbildung weist die erste Außenseite an einem vordefinierten Abstand von der Stirnkante eine sich in axialer Richtung der Fingerscheibe erstreckende zweite Erhebung auf. Hierdurch ist es möglich, die Fingerscheibe beidseitig zu benutzen.

Es ist von besonderem Vorteil, dass die Kontur der ersten Erhebung spiegelsymmetrisch zu der Kontur der zweiten Erhebung ist und dass die erste und zweite Erhebung in dem gleichen vordefinierten Abstand von der Stirnseite angeordnet sind. Hierdurch entsteht beispielsweise dann, wenn die erste und/oder zweite Erhebung unsymmetrische Flanken in radialer Richtung der Fingerscheibe aufweisen, eine schaberartige Form des Fingers, so dass unerwünschte Unkrautpflanzen besonders effektiv entlang von Kulturpflanzen entfernt werden können.

Bei einer bevorzugten Weiterbildung umfasst die Halterung zwei im Abstand voneinander angeordnete Scheibenelemente, zwischen denen die Fingerscheibe gelagert ist. Mit Hilfe dieser Scheibenelemente lässt sich die Fingerscheibe sicher in einer Halterung lagern.

Weiterhin ist es von Vorteil, dass die erste Erhebung und/oder die zweite Erhebung in axialer Richtung der Fingerscheibe über das an der ersten Außenseite bzw. zweiten Außenseite des Fingers angeordnete Scheibenelement hinausragen. Somit können Bodenschichten, die unterhalb der Fingerscheibe sind, sehr effektiv bearbeitet werden.

Zum Einbau des Fingerhackenelements in einem Bearbeitungsgerät ist es von Vorteil, dass die Halterung oder die Fingerscheibe einen Anschluss an eine Drehachse, insbesondere eine Nabe oder einen Achszapfen für eine drehbare Lagerung aufweist.

Es ist von Vorteil, dass die Fingerscheibe eine Drehrichtung aufweist und wenigstens ein Finger in Drehrichtung gebogen ist, um klauenartig in den Boden einzugreifen. Es hat sich hierbei als besonders vorteilhaft erwiesen, dass wenigstens ein Finger in Drehrichtung der Fingerscheibe nach vorne gebogen ist. Hierdurch kann der Finger besonders kraftvoll in den Boden eingreifen und wirkt der prozessbedingten unerwünschten Verbiegung eines Fingers nach hinten entgegen, wenn die Fingerscheibe zwischen den Stämmen der Kulturpflanze geführt wird.

Bei einer bevorzugten Ausführungsform ist die Höhe der beiden Seitenwände größer als die Breite der ersten und/oder der zweiten Außenseite. Somit können vergleichsweise tiefe Bodenschichten bearbeitet werden.

Zum Schutz der Kulturpflanzen und zur effektiven Beseitigung von Unkraut hat es sich als vorteilhaft erwiesen, dass sich die Außenseiten des wenigstens einen Fingers in radialer Richtung nach außen verjüngen.

Zur Vermeidung von Schäden an der Kulturpflanze ist es von Vorteil, dass die Fingerscheibe aus einem elastischen Material hergestellt ist. Vorzugsweise weist das elastische Material eine SHORE-Härte von A80 bis A95, insbesondere von A85 bis A92 auf.

Um zu verhindern, dass im Falle eines Schadens an der Fingerscheibe die komplette Fingerscheibe ausgetauscht werden muss, ist es von Vorteil, dass die kreisförmige Fingerscheibe aus wenigstens zwei Segmenten besteht, um bei Bedarf nur das beschädigte Segment auszutauschen.

Gegenstand der vorliegenden Erfindung ist auch ein Bodenbearbeitungsgerät, umfassend ein erfindungsgemäßes Fingerhackenelement sowie eine Haltevorrichtung zur Befestigung des Fingerhackenelements an einem Fahrzeug.

Bei einer bevorzugten Weiterbildung umfasst das Bodenbearbeitungsgerät eine Drehachse, an der das Fingerhackenelement drehbar gelagert ist, wobei die Drehachse vorzugsweise vertikal ausgerichtet ist.

Es ist weiter bevorzugt, dass das Bodenbearbeitungsgerät eine Rollhacke umfasst. Mit einer Kombination von hintereinander angeordneter Rollhacke und Fingerhackenelement lässt sich insbesondere im Weinbau der Boden sehr effektiv bearbeiten. Mit Hilfe der Rollhacke kann beispielsweise zunächst der Boden gelockert und verschoben werden. Hierdurch werden bereits unerwünschte Unkräuter, die zwischen den Rebzeilen wachsen, beschädigt. Mit dem dahinter befindlichen Fingerhackenelement können Unebenheiten in der Bodenoberfläche, die durch die Rollhacke entstehen, ausgeglichen werden. Da die Fingerhacke in die Erde greift, führt auch die Fingerhacke zu einer weiteren Beschädigung der unerwünschten Unkrautpflanzen, so dass die Überlebenschancen der Unkrautpflanzen weiter reduziert sind.

Zusätzlich oder alternativ zur Rollhacke kann ein Mulcher vorgesehen sein. Der Mulcher wird somit entweder nur zusammen mit der Fingerhacke verwendet oder beispielsweise zwischen Fingerhacke und Rollhacke angeordnet.

Bevorzugte Ausführungsformen werden anhand der beigefügten Zeichnungen näher erläutert.

Es zeigt:
- Fig. 1: ein Fingerhackenelement in einer perspektivischen Ansicht von unten,
- Fig. 2: ein Fingerhackenelement in einer Draufsicht von oben,
- Fig. 3: eine Fingerscheibe in perspektivischer Ansicht,
- Fig. 4: einen perspektivischen Ausschnitt eines Fingerhackenelements in Seitenansicht und
- Fig. 5: einen Teil einer Bodenbearbeitungsvorrichtung mit einem Fingerhackenelement und einer Rollhacke.

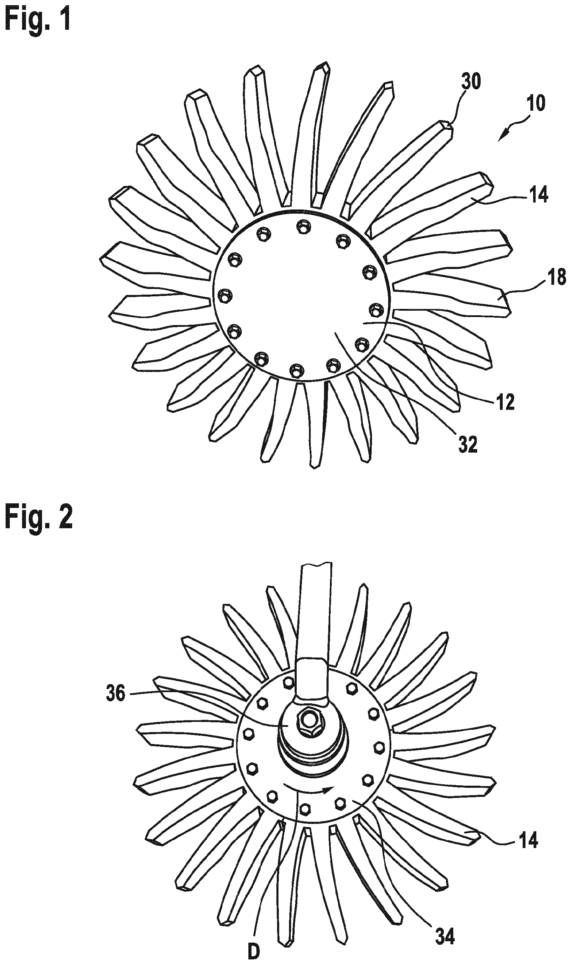

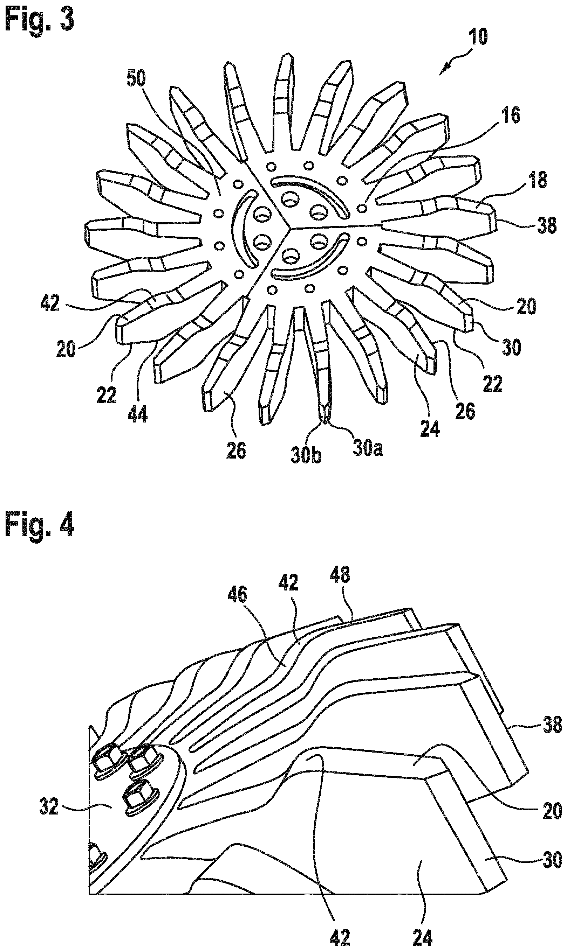

Fig. 1 zeigt ein Fingerhackenelement 10 in einer perspektivischen Ansicht von unten. Das Fingerhackenelement umfasst eine Halterung 12 und eine kreisförmige Fingerscheibe 14, die zusammen eine scheibenförmige Grundform aufweisen. Die Fingerscheibe 14 umfasst, wie besser in Fig. 3 zu erkennen ist, ein Innenelement 16 und eine Vielzahl von Fingern 18, die entlang des Umfangs des kreisförmigen Innenelements 16 angeordnet sind. Die einzelnen Finger 18 sind äquidistant angeordnet und weisen radial nach außen.

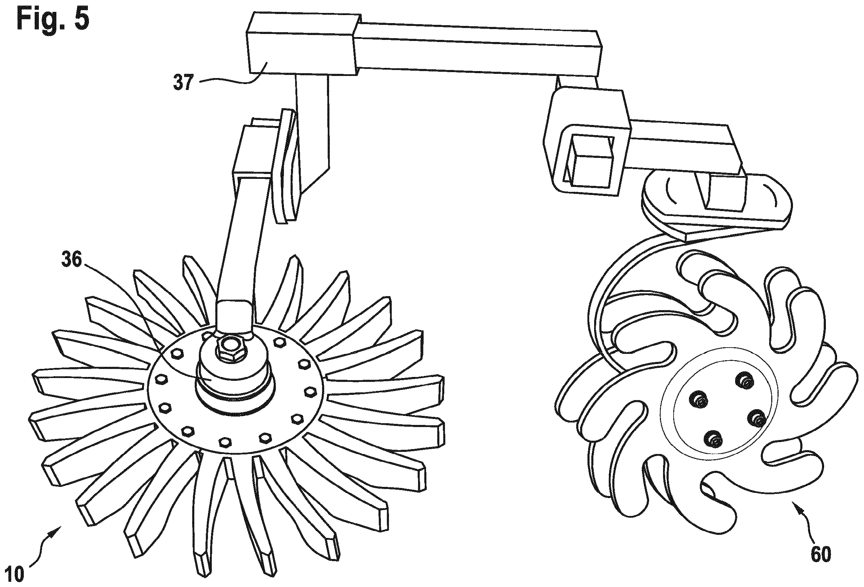

Die Finger 18 dienen der Bearbeitung des Bodens und als Antrieb des Fingerhackenelements 10 bei einer drehbaren Befestigung des Fingerhackenelements 10 an einer in Fig. 5 dargestellten Haltevorrichtung 37 eines Fahrzeugs.

Jeder Finger 18 weist eine erste Außenseite 20, eine zweite Außenseite 22, zwei Seitenwände, 24, 26 und eine Stirnseite 30 auf. Der Querschnitt durch einen Finger 18 weist eine eckige Form, insbesondere eine rechteckige Form auf. Zumindest am vorderen oder freien Ende der Finger 18 sind die Seitenwände 24, 26 höher als die erste bzw. zweite Außenseite 20, 22 breit ist.

In den Figuren 1 und 2 ist zu erkennen, dass die Halterung 12 zwei im Abstand voneinander angeordnete Scheibenelemente 32 und 34 aufweist, zwischen denen die Fingerscheibe 14 angeordnet ist. Die Scheibenelemente 32, 34 sind aus einem Metall gefertigt und entsprechen in ihrem Durchmesser in etwa dem Durchmesser des Innenelements 16 der Fingerscheibe 14.

Das im Bearbeitungszustand zum Boden weisende Scheibenelement 32 ist als glatte Scheibe ausgebildet, die mit der an der vom Boden wegweisenden Seite 34 verschraubt ist. An der Oberseite der vom Boden wegweisenden Scheibe 34 ist ein Anschluss 36 an eine Haltevorrichtung 37 eines Bodenbearbeitungsgeräts vorgesehen. Das Fingerhackenelement 10 ist mit der Haltevorrichtung 37 des Bodenbearbeitungsgeräts drehbar verbunden, wobei die Drehachse durch den Mittelpunkt der Fingerscheibe 14 hindurchgeht.

Beispielsweise kann das Fingerhackenelement 10 mit einer Nabe oder mit einem Achszapfen versehen sein, um das Fingerhackenelement 10 drehbar mit der Haltevorrichtung 37 zu verbinden.

Wie in den Figuren 1 und 2 zu erkennen ist, sind die einzelnen Finger 18 gebogen. Die einzelnen Finger 18 sind in Drehrichtung D der Fingerscheibe 14 nach vorne gebogen. Dabei sind die Finger gegenüber der radialen Richtung um etwa 10 bis 30 Grad, vorzugsweise 15 Grad, gebogen.

Insbesondere in den Figuren 3 und 4 ist zu erkennen, dass die Stirnseite 30 als spitz zulaufende Kante 38 ausgebildet ist. Die Kante 38 der Stirnseite 30 verläuft in axialer Richtung der Fingerscheibe 14 und wird aus zwei unter einem Winkel zusammenlaufenden Stirnseitenwänden 30a, 30b gebildet. Die Kante 38 ist an der Stirnseite 30 mittig angeordnet. Der Winkel zwischen den Stirnseitenwänden 30a, 30b liegt im Bereich von 120 Grad bis 60 Grad, vorzugsweise im Bereich von etwa 90 Grad.

Die erste und zweite Außenseite 20, 22 weisen jeweils in gleichem Abstand von der Stirnseite 30 eine sich in axialer Richtung erstreckende erste bzw. zweite Erhebung 42, 44 mit unsymmetrischen Flanken auf. Die Erhebungen 42, 44 befinden sich in der vorderen Hälfte des Fingers 18 mit deutlichem Abstand von der Stirnseite 30.

Jede Erhebung 32, 34 weist eine steile Flanke 46 in Richtung des kreisförmigen Innenelements 16 auf sowie eine flache Flanke 48 in Richtung der Stirnkante 38. Hierdurch entsteht in axialer Richtung der Fingerscheibe 14 ein schaberartiger Finger 18.

Die Erhebungen 42, 44 ragen an der Ober- und Unterseite des Fingerhackenelements 10 über die Scheibenelemente 32, 34 hinaus.

Weiterhin ist in Figur 3 zu erkennen, dass sich die Außenseiten 20, 22 der Finger 18 konisch nach außen verjüngen. Der Grad der Verjüngung kann je nach Anforderung unterschiedlich eingestellt werden.

Die Fingerscheibe 14 ist aus einem elastischen Material, beispielsweise einem Polyurethan hergestellt und weist eine SHORE-Härte von A80 bis A95, vorzugsweise eine SHORE-Härte von A85 bis A92, auf. Der Härtegrad wird in Abhängigkeit von dem zu bearbeitenden Boden gewählt.

Wie in Figur 3 zu erkennen ist, ist die Fingerscheibe 14 aus drei Fingerscheibensegmenten 50 hergestellt. Es versteht sich jedoch, dass die Fingerscheibe auch einstückig ausgebildet sein kann oder aus einer anderen Anzahl an Fingerscheibensegmenten zusammengesetzt ist.

Bei einer nicht dargestellten Ausführungsform weist der Querschnitt durch einen Finger 18 keine eckige Form, sondern eine abgerundete Form auf. So können beispielsweise eine oder beide Seitenwände nach Außen oder nach Innen gebogen sein. Zusätzlich oder alternativ können eine oder beide Außenwände ebenfalls nach Außen oder nach Innen gebogen sein. In dem Fall, in dem beide Seitenwände und beide Außenwände nach Außen gebogen sind, erhält der Finger einen Querschnitt mit einer ovalen oder runden Form.

Bei der dargestellten Ausführungsform sind die Seitenwände 24, 26 höher als die Breite der ersten und/oder zweiten Außenseite 20, 22. Wenn auch nicht dargestellt, so können die Seitenwände 24, 26 kleiner als die Breite der ersten und/oder zweiten Außenseite 20, 22 sein.

Zusätzlich oder alternativ kann die Krümmung der Finger weggelassen werden oder nach hinten geneigt sein.

Es versteht sich, dass die in Zusammenhang mit den dargestellten Ausführungsformen genannten Merkmale auch einzeln oder in anderen Kombinationen realisiert werden können.

Bei ebenfalls nicht dargestellten Ausführungsformen sind die Erhebungen an der Oberseite der Fingerscheibe weggelassen, wobei die im Zusammenhang mit der Fingerscheibe mit Erhebungen an der Oberseite genannten Merkmale auch an der Ausführungsform ohne Erhebungen an der Oberseite der Fingerscheibe einzeln oder in Kombination umgesetzt sind.

Die Fingerhacke kann seitlich, an der Vorderseite oder an der Rückseite eines landwirtschaftlichen Fahrzeugs montiert sein.

Figur 5 zeigt den Einsatz eines Fingerhackenelements 10 in Kombination mit einer Rollhacke 60. Das Fingerhackenelement 10 ist drehbar an einer Halterung 37 befestigt, wobei die Halterung 37 wiederum mit einem nicht dargestellten landwirtschaftlichen Zugfahrzeug verbunden ist. In Fahrtrichtung vor dem Fingerhackenelement 10 befindet sich die Rollhacke 60, die ebenfalls mittels der Halterung 37 an dem landwirtschaftlichen Zugfahrzeug befestigt ist.

In bekannter Art und Weise sorgt die Rollhacke 60 dafür, dass der Boden zwischen zwei Pflanzreihen im Bereich der Kulturpflanze aufgeworfen und gelockert wird, wenn das landwirtschaftliche Zugfahrzeug fährt. Hierbei werden bereits Unkrautpflanzen beschädigt.

Das horizontal zur Bodenoberfläche ausgerichtete Fingerhackenelement 10 gräbt sich hinter der Rollhacke 60 mittels der an der Stirnseite 30 eines Fingers 18 ausgebildeten spitzen Kante 38 in die Bodenoberfläche ein, dreht sich in der obersten Bodenschicht und vergleichmäßigt die von der Rollhacke 60 aufgeworfene Erde. Hierbei werden die sich im Boden befindlichen Unkrautpflanzen beschädigt und gegebenenfalls von der Wuchsstelle entfernt. Die nach unten weisenden Erhebungen 42 der Finger 18 sorgen dafür, dass das Wurzelwerk der Unkrautpflanzen auch unterhalb des Fingerhackenelements 10 effektiv beschädigt bzw. sogar entfernt werden kann.

Die Fingerhacke ist beispielsweise auch in Kombination mit einem Mulcher an einem landwirtschaftlichen Fahrzeug einsetzbar, wobei die Fingerhacke in Fahrtrichtung eines landwirtschaftlichen Fahrzeugs hinter dem Mulcher angeordnet ist. In diesem Fall können die Fingerhacke und der Mulcher jeweils mittels einer Halterung an einem landwirtschaftlichen Fahrzeug befestigt werden. Alternativ kann die Fingerhacke direkt am Mulcher befestigt sein, wobei der Mulcher wiederum am landwirtschaftlichen Fahrzeug befestigt ist.

Weiterhin kann die Fingerhacke auch in Kombination mit einem Mulcher und einer Rollhacke verwendet werden. Bei diesem Anwendungsbeispiel ist der Mulcher zwischen Fingerhacke und Rollhacke vorgesehen, wobei die Fingerhacke in Fahrtrichtung eines landwirtschaftlichen Fahrzeugs hinter dem Mulcher angeordnet ist. Sowohl die Fingerhacke als auch die Rollhacke können hierbei direkt an dem Mulcher befestigt sein. Alternativ kann eine Halterung an dem landwirtschaftlichen Fahrzeug vorgesehen sein, an welcher die Fingerhacke und/oder die Rollhacke wiederum befestigt sind.

Eine Halterung, an der wenigstens eines der Bodenbearbeitungswerkzeuge Fingerhacke, Rollhacke und/oder Mulcher befestigt sind, ist bei einer nicht dargestellten Ausführungsform an der Rückseite des landwirtschaftlichen Fahrzeugs befestigt. Hierbei können zwei Sätze an Bodenbearbeitungswerkzeugen vorgesehen sein, die jeweils entlang einer Achse in Fahrtrichtung des landwirtschaftlichen Fahrzeugs und paarweise nebeneinander angeordnet sind, wobei jeder Satz an Bodenbearbeitungswerkzeugen vorzugsweise seitlich über das landwirtschaftliche Fahrzeug hinausragt. Hierdurch ist es möglich gleichzeitig zwei nebeneinanderstehende Pflanzenreihen zu bearbeiten.

## Patentansprüche

1. Fingerhackenelement geeignet für die Bodenbearbeitung umfassend eine Halterung (12) und eine kreisförmige Fingerscheibe (14) mit einem Innenelement (16) und einer Vielzahl von Fingern (18), wobei die Finger (18) entlang des Außenrandes des Innenelements (16) angeordnet sind und sich von dem Innenelement (16) radial nach außen erstrecken, wobei wenigstens ein Finger (18) jeweils eine erste Außenseite (20), eine zweite Außenseite (22), zwei Seitenwände (24, 26) und eine Stirnseite (30) aufweist und wobei die Stirnseite (30) eine spitz zulaufende Kante (38) aufweist, die sich in axialer Richtung der Fingerscheibe (14) erstreckt,
**dadurch gekennzeichnet, dass** die Fingerscheibe ein Antriebselement aufweist und der wenigstens eine Finger an seiner ersten Außenseite (20) in einem vordefinierten Abstand von der Stirnseite (30) eine sich in axialer Richtung der Fingerscheibe (14) erstreckende erste Erhebung (42) aufweist, wobei die erste Erhebung (42) die Funktion des Antriebselements übernimmt und ausgelegt ist, Erdschichten unterhalb der Fingerscheibe zu lockern und Wurzeln von unterwünschten Pflanzen zu entfernen.

2. Fingerhackenelement nach Anspruch 1, **dadurch gekennzeichnet, dass** die zweite Außenseite (22) in einem vordefinierten Abstand von der Stirnseite (30) eine sich in axialer Richtung der Fingerscheibe (14) erstreckende zweite Erhebung (44) aufweist.

3. Fingerhackenelement nach einem der vorhergehenden Ansprüche, **dadurch gekennzeichnet, dass** die erste Erhebung (42) und/oder die zweite Erhebung unsymmetrische Flanken in radialer Richtung der Fingerscheibe (14) aufweist.

4. Fingerhackenelement nach einem der Ansprüche 2 oder 3, **dadurch gekennzeichnet, dass** die Kontur die Form der ersten Erhebung (42) spiegelsymmetrisch zu der Kontur der zweiten Erhebung (44) ist und dass die erste und zweite Erhebung (42, 44) in dem gleichen vordefinierten Abstand von der Stirnseite (30) angeordnet sind.

5. Fingerhackenelement nach einem der vorhergehenden Ansprüche, **dadurch gekennzeichnet, dass** die Halterung (12) zwei im Abstand voneinander angeordnete Scheibenelemente (32, 34) umfasst, zwischen denen die Fingerscheibe (14) gelagert ist.

6. Fingerhackenelement nach Anspruch 5, **dadurch gekennzeichnet, dass** die erste Erhebung (42) und/oder die zweite Erhebung (44) in axialer Richtung der Fingerscheibe (14) über das an der ersten Außenseite (20) bzw. zweiten Außenseite (22) des Fingers (18) angeordnete Scheibenelement (32, 34) hinausragt.

7. Fingerhackenelement nach einem der vorhergehenden Ansprüche, **dadurch gekennzeichnet, dass** die Halterung oder die Fingerscheibe einen Anschluss an eine Drehachse, insbesondere eine Nabe oder ein Achszapfen für eine drehbare Lagerung, aufweisen.

8. Fingerhackenelement nach einem der vorhergehenden Ansprüche, **dadurch gekennzeichnet, dass** die Fingerscheibe (14) eine Drehrichtung (D) aufweist und wenigstens ein Finger (18) in Drehrichtung (D) gebogen ist, wobei vorzugsweise der wenigstens eine Finger (18) in Drehrichtung (D) der Fingerscheibe (14) nach vorne gebogen ist.

9. Fingerhackenelement nach einem der vorhergehenden Ansprüche, **dadurch gekennzeichnet, dass** die Höhe der beiden Seitenwände (24, 26) größer als die Breite der ersten und/oder zweiten Außenseite (20, 22) ist.

10. Fingerhackenelement nach einem der vorhergehenden Ansprüche, **dadurch gekennzeichnet, dass** sich die Außenseiten (20, 22) des Fingers (18) in radialer Richtung der Fingerscheibe (14) nach außen verjüngen.

11. Fingerhackenelement nach einem der vorhergehenden Ansprüche, **dadurch gekennzeichnet, dass** die Fingerscheibe (14) aus einem elastischen Material hergestellt ist, wobei das elastische Material vorzugsweise eine SHORE-Härte von A 80 bis A 95, besonders bevorzugt eine SHORE-Härte von A85 bis A92 aufweist.

12. Fingerhackenelement nach einem der vorhergehenden Ansprüche, **dadurch gekennzeichnet, dass** die kreisförmige Fingerscheibe (14) aus wenigstens zwei Segmenten (50) besteht.

13. Bodenbearbeitungsgerät umfassend ein Fingerhackenelement (10) nach einem der Ansprüche 1 bis 12, **dadurch gekennzeichnet, dass** eine Haltevorrichtung (37) zur Befestigung des Fingerhackenelements (10) an einem Fahrzeug vorgesehen ist.

14. Bodenbearbeitungsgerät nach Anspruch 13, **dadurch gekennzeichnet, dass** die Haltevorrichtung (37) eine Drehachse, insbesondere eine vertikale Drehachse aufweist, an der das Fingerhackenelement (10) drehbar gelagert ist,

15. Bodenbearbeitungsgerät nach einem der Ansprüche 13 oder 14, **dadurch gekennzeichnet, dass** eine Rollhacke (60) und/oder ein Mulcher vorgesehen sind.

## Claims

1. A finger weeder element suitable for tillage comprising a holder (12) and a circular finger disc (14) having an inner element (16) and a plurality of fingers (18), said fingers (18) being arranged along the outer edge of said inner element (16) and extending radially outward from said inner element (16), wherein at least one finger (18) has a respective first outer side (20), a second outer side (22), two side walls (24, 26) and a front side (30), and wherein the front side (30) has a tapered edge (38) extending in the axial direction of the finger disc (14),
**characterized in that** the finger disc has a drive element and the at least one finger has, on its first outer side (20) at a predefined distance from the front side (30), a first protrusion (42) extending in the axial direction of the finger disc (14), wherein the first protrusion (42) assumes the function of the drive element and is designed to loosen the layers of earth beneath the finger disc and to remove roots of undesired plants.

2. The finger weeder element according to claim1, **characterized in that** the second outer side (22) has, at a predefined distance from the front side (30), a second protrusion (44) extending in the axial direction of the finger disc (14).

3. The finger weeder element according to any one of the preceding claims, **characterized in that** the first protrusion (42) and/or the second protrusion have asymmetrical flanks in the radial direction of the finger disc (14).

4. The finger weeder element according to any one of claims 2 or 3, **characterized in that** the contour is the shape of the first protrusion (42) mirror symmetrical to the contour of the second protrusion (44) and that the first and second protrusions (42, 44) are arranged at the same predefined distance from the front side (30).

5. The finger weeder element according to any one of the preceding claims, **characterized in that** the holder (12) comprises two disc elements (32, 34) arranged at a distance from each other, between which the finger disc (14) is mounted.

6. The finger weeder element according to claim 5, **characterized in that** the first protrusion (42) and/or the second protrusion (44) project in the axial direction of the finger disc (14) beyond the disc element (32, 34), which is arranged on the first outer side (20) or second outer side (22) of the finger (18).

7. The finger weeder element according to any one of the preceding claims, **characterized in that** the holder or the finger disc are connected to a rotary axis, in particular a hub or an axle journal for a rotatable bearing.

8. The finger weeder element according to any one of the preceding claims, **characterized in that** the finger disc (14) has a direction of rotation (D) and at least one finger (18) is bent in the direction of rotation (D), wherein preferably the at least one finger (18) is bent forward in the direction of rotation (D) of the finger disc (14).

9. The finger weeder element according to any one of the preceding claims, **characterized in that** the height of the two side walls (24, 26) is greater than the width of the first and/or second outer side (20, 22).

10. The finger weeder element according to any one of the preceding claims, **characterized in that** the outer sides (20, 22) of the finger (18) taper outwardly in the radial direction of the finger disc (14).

11. The finger weeder element according to any one of the preceding claims, **characterized in that** the finger disc (14) is made of an elastic material, wherein the elastic material preferably has a SHORE hardness of A80 to A95, most preferably a SHORE hardness of A85 to A92.

12. The finger weeder element according to any one of the preceding claims, **characterized in that** the circular finger disc (14) consists of at least two segments (50).

13. A tillage device comprising a finger weeder element (10) according to any one of claims 1 to 12, **characterized in that** a fastening device (37) is provided for fastening the finger weeder element (10) to a vehicle.

14. The tillage device according to claim 13, **characterized in that** the fastening device (37) has a rotary axis, preferably a vertical rotary axis, on which the finger weeder element (10) is rotatably mounted.

15. The tillage device according to any one of claims 13 or 14, **characterized in that** a roller weeder and/or a mulching roller are provided.

## Revendications

1. Elément de sarcleuse à doigts se prêtant au travail du sol, comprenant un support (12) et un disque circulaire (14) porte-doigts muni d'un élément intérieur (16) et d'une multiplicité de doigts (18), lesquels doigts (18) sont implantés le long du bord extérieur dudit élément intérieur (16) et s'étendent vers l'extérieur, dans le sens radial, à partir dudit élément intérieur (16), sachant qu'un moins un doigt (18) comprend, à chaque fois, une première face extérieure (20), une seconde face extérieure (22), deux parois latérales (24, 26) et une face extrême (30), et sachant que ladite face extrême (30) présente une arête (38) qui s'achève en pointe et s'étend dans le sens axial du disque (14) porte-doigts,
**caractérisé par le fait que** le disque porte-doigts est pourvu d'un élément d'entraînement, et que le doigt à présence minimale est doté au niveau de sa première face extérieure (20), à une distance prédéfinie par rapport à la face extrême (30), d'un premier bossage (42) s'étendant dans le sens axial dudit disque (14) porte-doigts, lequel premier bossage (42) remplit la fonction dudit élément d'entraînement et est conçue pour ameublir les couches de terre sous le disque porte-doigts et pour enlever les racines des plantes non souhaitées.

2. Elément de sarcleuse à doigts, selon la revendication 1, **caractérisé par le fait que** la seconde face extérieure (22) est dotée, à une distance prédéfinie par rapport à la face extrême (30), d'un second bossage (44) s'étendant dans le sens axial du disque (14) porte-doigts.

3. Elément de sarcleuse à doigts, selon l'une des revendications précédentes, **caractérisé par le fait que** le premier bossage (42) et/ou le second bossage (44) présente(nt) des flancs asymétriques dans le sens radial du disque (14) porte-doigts.

4. Elément de sarcleuse à doigts, selon l'une des revendications 2 ou 3, **caractérisé par le fait que** le profil du premier bossage (42) est spéculaire vis-à-vis du profil du second bossage (44) ; et **par le fait que** lesdits premier et second bossages (42, 44) sont disposés à la même distance prédéfinie par rapport à la face extrême (30).

5. Elément de sarcleuse à doigts, selon l'une des revendications précédentes, **caractérisé par le fait que** le support (12) inclut deux éléments discoïdaux (32, 34) disposés à distance l'un de l'autre, entre lesquels le disque (14) porte-doigts est monté.

6. Elément de sarcleuse à doigts, selon la revendication 5, **caractérisé par le fait que** le premier bossage (42) et/ou le second bossage (44) dépasse(nt), dans le sens axial du disque (14) porte-doigts, au-delà de l'élément discoïdal (32, 34) implanté, respectivement, au niveau de la première face extérieure (20) ou de la seconde face extérieure (22) du doigt (18).

7. Elément de sarcleuse à doigts, selon l'une des revendications précédentes, **caractérisé par le fait que** le support ou le disque porte-doigts est muni d'un rattachement à un axe de rotation, en particulier à un moyeu ou à un bout d'arbre dédié à un montage tournant.

8. Elément de sarcleuse à doigts, selon l'une des revendications précédentes, **caractérisé par le fait que** le disque (14) porte-doigts présente une direction de rotation (D) et au moins un doigt (18) est arqué dans ladite direction de rotation (D), sachant que ledit doigt (18), concerné au minimum, est de préférence arqué vers l'avant dans ladite direction de rotation (D) dudit disque (14) porte-doigts.

9. Elément de sarcleuse à doigts, selon l'une des revendications précédentes, **caractérisé par le fait que** la hauteur des deux parois latérales (24, 26) est supérieure à la largeur de la (des) première et/ou seconde face(s) extérieure(s) (20, 22).

10. Elément de sarcleuse à doigts, selon l'une des revendications précédentes, **caractérisé par le fait que** les faces extérieures (20, 22) du doigt (18) s'amenuisent vers l'extérieur dans le sens radial du disque (14) porte-doigts.

11. Elément de sarcleuse à doigts, selon l'une des revendications précédentes, **caractérisé par le fait que** le disque (14) porte-doigts est fabriqué en un matériau élastique, lequel matériau élastique présente, de préférence, une dureté de 80 Shore A à 95 Shore A, une dureté de 85 Shore A à 92 Shore A avec préférence particulière.

12. Elément de sarcleuse à doigts, selon l'une des revendications précédentes, **caractérisé par le fait que** le disque circulaire (14) porte-doigts est composé d'au moins deux segments (50).

13. Appareil de travail du sol comprenant un élément (10) de sarcleuse à doigts, conforme à l'une des revendications 1 à 12, **caractérisé par** la présence d'un dispositif de maintien (37) dévolu à la fixation de l'élément (10) de sarcleuse à doigts à un véhicule.

14. Appareil de travail du sol, selon la revendication 13, **caractérisé par le fait que** le dispositif de maintien (37) présente un axe de rotation, en particulier un axe vertical de rotation sur lequel l'élément (10) de sarcleuse à doigts est monté tournant.

15. Appareil de travail du sol, selon l'une des revendications 13 ou 14, **caractérisé par** la présence d'une bineuse rotative (60) et/ou d'un mulcheur.
